# EUROPÄISCHE PATENTANMELDUNG

(11) **EP 0 964 580 A2**
(43) Veröffentlichungstag der Anmeldung: **15.12.1999**
(21) Anmeldenummer: 99110328.4
(22) Anmeldetag: 28.05.1999
(51) Int. Cl.: H04N 7/18

(54) **Verfahren und Vorrichtung zur Herstellung, Übertragung und Wiedergabe von Fernsehprogrammen in Geschäftsräumen**

(30) Priorität: 10.06.1998 DE 19825394
(71) Anmelder: Breeze TV GmbH, 50259 Pulheim-Stommeln (DE)
(72) Erfinder: Backhaus, Hagen, Prof. Dr., 42349 Wuppertal (DE)
(74) Vertreter: Bauer, Wulf, Dr.

(57) **Zusammenfassung**

Die Erfindung beschreibt eine Vorrichtung, bestehend aus Empfänger eines Telekommunikationsdienstes zum Empfang einer digitalen Nachricht (dem Steuerungsprogramm), einem Steuergerät und einem Abspielgerät mit Videodatenbank, die miteinander verbunden sind und dadurch in der Lage sind, durch Anwendung des Steuerungsprogramms auf die Videodatenbank ein audiovisuelles Programm (Geschäftsfernsehen) abzuspielen, wobei das Abspielgerät eine Videodatenbank auf mindestens einem Speichermedium enthält, die aus einzeln indizierten audiovisuellen Programmabschnitten variabler Länge besteht, auf die das Abspielgerät wahlfrei direkt zum Abspielen zugreifen kann, und das Abspielgerät über eine elektrische Schnittstelle ein Steuerungsprogramm mit dem Steuergerät austauscht, das auf die Videodatenbank bezogen ist und die Reihenfolge und Bilddarstellung der Programmabschnitte aus der Videodatenbank enthält, die als BTV abgespielt werden sollen, und das Steuergerät das Steuerungsprogramm über eine digitale Schnittstelle vom Empfänger des Telekommunikationsdienstes übernimmt, entsprechend den Eigenschaften des Abspielgeräts bearbeitet und dem Abspielgerät über eine elektrische Schnittstelle übergibt, und der Empfänger eines Telekommunikationsdienstes ein Steuerungsprogramm empfängt, das die Reihenfolge und Bilddarstellung der Programmabschnitte aus der Videodatenbank enthält, die als Programm abgespielt werden sollen, und an das Steuergerät übergibt, und ein Telekommunikationsdienst verwendet wird, der in der Lage ist, digitale Informationen von einem Sender zu einem Empfänger (Punkt zu Punkt) oder von einem Sender zu mehreren wählbaren Emfängern (Multipoint) zu übertragen.

## Beschreibung

Die Erfindung bezieht sich auf ein Verfahren und eine Vorrichtung zum Herstellen, Übertragen und zur Wiedergabe von Fernsehprogrammen in Geschäftsräumen, beispielsweise Ladenlokalen, Wartezimmern von Ärzten, auf Bahnsteigen von Bahnhöfen, in Warteräumen von Flughäfen und dergleichen.

Für die Anwendung für ein Geschäftsfernsehen, im folgenden auch Business-TV genannt, wird ein System mit einer Video-Datenbank eingesetzt, die durch externe Steuerung aktiviert wird. Das zur externen Steuerung verwendete Steuerungsprogramm wird vom Programmlieferanten in die verschiedenen Geschäftsräume über einen Telekommunikationsdienst relativ zeitnah übertragen. Das Steuerungsprogramm startet die Reihenfolge von Videosequenzen aus der Video-Datenbank, die bereits beim Benutzer vorhanden ist, und damit den Inhalt des Business-TV. Insbesondere betrifft die Erfindung ein derartiges Business-TV-System, bei dem als Telekommunikationsdienst ein einseitig arbeitender Telekommunikationsdienst, beispielsweise ein pager-gesteuertes Verfahren.

Die Erfindung bezieht sich auf das folgende technisches Gebiet : Videoprogramm-Übertragung, Videoprogrammdarstellung, Multimedia, Video in geschlossenen Benutzergruppen und abgrenzbaren Räumen, Business-TV.

Geschäftsfernsehen wird in Geschäftsräumen (Einzelhandel, Büros) eingesetzt, um audiovisuelle Programme zu Programmempfängern (Kunden, Passanten) hin zu präsentieren. Die Inhalte der Programme sind im allgemeinen werblicher und/oder informeller, unterhaltender Natur, die Lebensdauer der Programme ist zumeist kurz. Empfänger der Programme sind typischerweise geschlossene oder aber auch offene Benutzergruppen.

Ein Business-TV-Programm besteht aus einer Folge von Teilprogrammen, die jeweils eine bestimmte kommerziell-werbliche oder unterhaltende Aussage zum Inhalt haben, z.B eine Folge von Werbespots, kurzen Filmabschnitten, Informationen usw. Die Präsentation des Programms vor Ort erfolgt technisch über einen oder mehrere, über ein lokales Netz verbundene Fernsehmonitore. Dabei zeigen alle Fernsehmonitore das gleiche Programm. Der Kunde bzw. Betrachter hat keinen Einfluß auf die Inhalte oder die Reihenfolge des Programms.

Das Programm wird von einem Programmlieferanten produziert, d.h. in Inhalt und Reihenfolge gestaltet und auf einem primären Programmträger gespeichert. Ein solches Programm ist fixiert in Inhalt und Reihenfolge der Teilprogramme. Von diesem primären Programmträger wird das Programm auf sekundäre Programmträger wie Videoband, Compact Disc (CD) oder Digital Versatile Disc (DVD) vervielfältigt und diese sekundären Programmträger an die Geschäftsräume verteilt, z. B. per Post. Dort werden sie mit einem geeigneten Abspielgerät (Video-/CD-/DVD-Player) als Einzel- oder Endlosprogramm über die Fernsehmonitore präsentiert.

Der Produktionszyklus und die Verteilung der Programmträger bedingt, daß die Programminhalte nicht flexibel geändert oder erweitert werden können, insbesondere keine aktuellen Informationen eingespielt werden können. Eine Aktualisierung des Programms kann nur über die Produktion von neuen, primären und sekundären Programmträgern und deren Verteilung erfolgen. Dies widerspricht der Zielsetzung der Anwender, insbesondere Werbeindustrie, die sehr kurzfristig auf Ereignisse des Marktes reagieren und diese Reaktionen in die Programme einbauen möchte.

Die Erfindung nutzt die vorhandene Technologie der Datenträger CD oder DVD und ihrer Abspielgeräte und verbindet die Geschäftsräume über Telekommunikationssysteme mit dem Programmlieferanten, der damit in der Lage ist, aktualisierte Steuerungs- und Programminformationen zu den Abspielgeräten zu übertragen. Durch die Verbindung der Technologien der Abspielgeräte und der Telekommunikationsdienste ergeben sich neue Möglichkeiten, die Programme flexibel zu gestalten und Programmänderungen und Zusatzinformationen aktuell einzuspielen.
Das Business-TV-Programm wird produziert in zwei Teilen, der Videodatenbank und dem dazugehörigen Steuerungsprogramm.
Die Videodatenbank besteht aus einer Folge von gespeicherten Teilprogrammen (Bildsequenzen), die einzeln indiziert sind, so daß das Abspielgerät dadurch direkt wahlfrei auf diese zugreifen kann. Die Videodatenbank wird an die Geschäftsräume verteilt auf Programmträger DVD- oder CDi- oder Video-CD zum Abspielen auf einem entsprechenden Abspielgerät (Player). Eine DVD faßt dabei ca. 10 Std., eine CDi oder Video-CD ca. 75 min Programm.
Das Steuerungsprogramm beschreibt Art und Reihenfoge, in der die Teilprogramme vom Abspielgerät abgespielt werden sollen.
Das aktuell abzuspielende Business-TV-Programm besteht demnach aus den auf Programmträger gespeicherten Teilprogrammen in der Videodatenbank und einem aktuell unabhängig davon einzubringenden Steuerungsprogramm, das die Reihenfolge der Teilprogramme, deren Bilddarstellung und Zusatzinformationen wie z.B. Fließtexte, umfasst.

Das Steuerungsprogramm wird dem Abspielgerät über die Programmsteuerung des Abspielgeräts extern vorgegeben. Dabei speichert das Abspielgerät -je nach eigener Speicherkapazität- eine bestimmte Anzahl von Teilprogrammindizes, die nacheinander abgespielt werden sollen und Vorgaben über Bildlage, z.B. Bild in Bild (Sequenz x in Sequenz y) oder Zusatztexte, die eingeblendet werden sollen, z.B. Preisinformationen. Falls das Steuerungsprogramm umfangreicher ist als die Kapazität des Programmspeichers im Abspielgerät, wird es von extern (aus dem Speicher des Steuergeräts) nachgeladen.

Das Steuerungsprogramm wird vom Programmproduzenten für den speziellen Datenträger erstellt und aktuell modifiziert. Es ist unabhängig vom speziell eingesetzten Abspielgerät. Die Modifikation des Steuerungsprogramms zum Zweck der Aktualisierung kann z. B. die Änderung der Reihenfolge, Ausblenden nicht mehr gewünschter Teilprogramme, Einfügen vorher noch nicht abgespielter Teilprogramme (z.B. für Produktpromotionen zum Termin) und das Einblenden aktueller, auf dem Datenträger nicht gespeicherte Information, z. B. Preisinformation umfassen.

Das Steuerungsprogramm wird von zentraler Stelle über einen Telekommunikationsdienst, der in der Lage ist, vom Sender zum Empfänger Punkt zu Punkt oder Punkt zu Gruppe (Multipunkt) zu übertragen, an geeignete Empfänger in den einzelnen Geschäftsräumen übertragen.

Der Empfänger des Telekommunikationsdienstes ist Teil des Steuergeräts, das mit dem Abspielgerät verbunden ist. Es übernimmt über Schnittstelle vom Empfänger das Steuerungsprogramm, speichert es, bereitet es auf -entsprechend den technischen Möglichkeiten des Abspielgeräts- und überträgt es über eine Programmierschnittstelle einmalig oder schritthaltend mit dem Programmablauf an das Abspielgerät. Das Abspielgerät spielt daraufhin das Business-TV-Programm mit dem aktuell gültigen, vom Steuergerät übergebenen Programm auf den Fernsehmonitoren, die über ein geeignetes Netz mit dem Abspielgerät verbunden sind, in den Geschäftsräumen ab.

Durch die Trennung von vorgefertigten Programmteilen (großes Datenvolumen, Verteilung über Datenträger CD, DVD, etc.) und aktualisierbarem Steuerungsprogramm (geringes Datenvolumen, Verteilung über Telekommunikationsdienst) läßt sich ein Business-TV-Programm realisieren, das ständig aktuell und flexibel einsetzbar ist. Das Konzept erspart den häufigen Transport von Datenträgern wie CD, DVD, etc. für jede Aktualisierung des Business-TV-Programms, ermöglicht sonst nicht realisierbare Aktualität, z.B. Einblendung von aktuellen Preisen, und erlaubt die Fernsteuerung der Programmpräsentation von zentraler Stelle.

Die nachfolgende Darstellung des Verfahrensablaufs und der dazu nötigen Vorrichtungen ergänzt die prinzipielle, oben gegebene Darstellung und nimmt bezug auf die Zeichnung. In dieser zeigen:
- FIG. 1:: ein Blockschaltbild eines kompletten Systems für Geschäftsfernsehen und
- FIG. 2:: ein Bockschaltbild für die wesentlichen Komponenten, die für Senden und Empfangen des Steuerungsprogramms notwendig sind.

Das Business-TV-Programm wird vom Programmlieferanten 11 produziert. Dazu werden einzelne Videosequenzen, typisch jeweils einige Minuten lang, erstellt, aus denen das in den Geschäftsräumen abzuspielende Business-TV-Programm, Länge bis zu mehreren Stunden, ggf. in Endlosschleife, zusammengestellt wird. Zur Definition des Business-TV-Programms wird vom Programmlieferanten parallel ein oder mehrere Steuerungsprogramme 12 erstellt, die die Reihenfolge und Darstellungsart der Videosequenzen und zusätzliche Texte innerhalb des Geschäftsfernsehens beschreiben.

Die Videosequenzen sind dazu einzeln mit einem eindeutigen Index versehen. Sie stellen die o.g. Videodatenbank 13 dar. Diese Videodatenbank wird mit einem eindeutigen Namen oder einer eindeutigen Kennung versehen auf einem als Programmträger dienenden Medium, vorzugsweise DVD, an die Geschäftsräume verteilt. Bei größerem Programmangebot sind auch mehrere Datenträger möglich. Diese Verteilung erfolgt typisch in Abständen von Wochen oder Monaten, insbesondere per Post.

Das der Videodatenbank 13 zugehörige Steuerungsprogramm 12 wird für ein bestimmtes Gechäftsfernsehen erstellt. Da das Geschäftsfernsehen spezifisch für Geschäftsräume oder Gruppen von Geschäftsräumen sein soll, oder auch auf aktuelle Ereignisse, wie Aktionen oder Preisveränderungen, reagieren soll, werden zu einer Videodatenbank verschiedene Steuerungsprogramme erstellt, die täglich bis hin zu stündlich, oder je nach Zielgruppe unterschiedlich sein können. Dementsprechend erfolgt die Verteilung kurzfristig, typisch über Nacht. Das Steuerungsprogramm kann auch unterbrechbar oder zeitnah (nahezu zeitgleich mit dem Abspielvorgang) sein, um aktuelle Videosequenzen einzublenden, z.B. eine Laufschrift mit neuer Preisinformation oder Hinweise auf Aktionen.

Das Steuerungsprogramm kann sich auf einen bestimmten Empfänger oder eine Empfängergruppe beziehen. Für verschiedene Empfängergruppen (z.B. regional oder verschiedene Geschäftszweige) können zu einer Videodatenbank verschiedenen Steuerprogramme existieren.
Das Steuerungsprogramm enthält als wesentliche Bestandteile 1.) die Reihenfolge der abzuspielenden Videosequenzen aus der Videodatenbank (Folge von Indizes), 2.) Informationen über Bilddarstellung der einzelnen Videosequenzen: Überblendung, Bild in Bild, etc., 3.) Zusätzliche Einblendungen: Texte stehend oder als Fließtext (mit Angabe der Texte und ggf. des zu verwendenden Fonts), 4.) Steuerinformationen: Angabe der Programmträger-Bezeichnung oder -Bezeichnungen der Videodatenbank, auf die sich das Steuerungsprogramm bezieht.

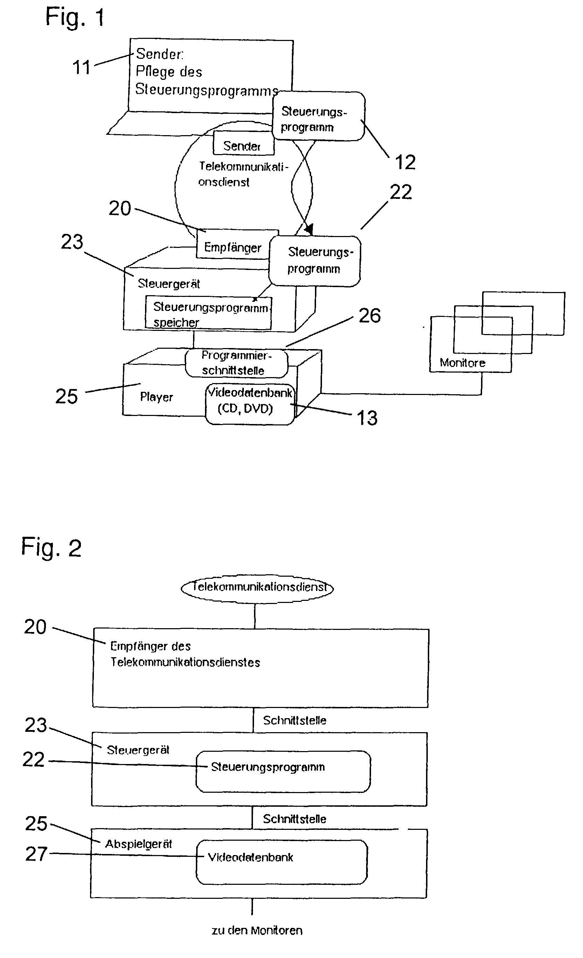

Das Steuerungsprogramm für das Geschäftsfernsehen wird vom Programmlieferanten als Sender 11 an die Geschäftsräume verteilt. Als Übertragungsmedium vorzugsweise ein schmalbandiger, preisgünstiger Telekommunikationsdienst verwendet, insbesondere ein nur einseitiger Telekommunikationsdienst. Das schließt nicht aus, daß andere Dienste verwendet werden, wenn sie preisgünstig verfügbar sind. Nach heutigem Stand der Technik wird vom Sender über ein tonwahlfähiges Telefon oder über den Operator-Service des Funkdienstes (Pagerdienstes) von TelMi, Scall, Skyper, Quix oder Cityruf an die Empfänger übertragen, siehe FIG. 1. Die Übertragung kann entsprechend den Möglichkeiten des Telekommunikationsdienstes Punkt-zu-Punkt (Sender an einen bestimmten Empfänger) oder als Gruppenaufruf (Sender an mehrere Empfänger gleichzeitig) erfolgen.
Die Geschäftsräume sind jeweils ausgestattet mit einem Abspielgerät 25, das die Videodatenbank 27 auf Programmträger (vorzugsweise DVD) aufnimmt, und einem damit verbundenen Steuergerät 23 mit Empfänger 20 und Logik 21 zur Aufbereitung des empfangenen Steuerungsprogramms 22.
Der Empfänger ist für den Empfang des Telekommunikationsdienstes oder von Telefonwahlinformationen (MFV) eingerichtet. Das Steuergerät übernimmt das Steuerungsprogramm und bereitet es spezifisch für das Abspielgerät so auf (entsprechend den technischen Möglichkeiten des Abspielgeräts), daß es über die Programmierschnittstelle an das Abspielgerät übergeben werden kann. Im Sinne einer externen Programmablaufsteuerung werden damit Reihenfolge und Darstellung der Videosequenzen im BTV bestimmt, das vom Abspielgerät an den Monitoren im Geschäftsraum wiedergegeben wird.
Über die Programmierschnittstelle 26 werden neben dem Steuerungsprogramm auch Statusinformationen des Abspielgeräts ausgetauscht, so daß die Übergabe des Steuerungsprogramms vom Empfänger an das Abspielgerät in Abstimmung mit dem laufenden Programm erfolgen kann und darüber hinaus das BTV-Programm auch für aktuelle Einblendungen von Fließtext oder Durchsagen unterbrochen werden kann. Darüberhinaus kann zwischen vom Abspielgerät zum Steuergerät die Kennung des Programmträgers übergeben werden, um sicherzustellen, daß das Steuerungsprogramm und der im Abspielgerät befindliche Programmträger zusammenpassen. Falls mehrere Programmträger und ein CD/DVD-Wechsler-Abspielgerät verwendet werden, wird die Prüfung dementsprechend erweitert. Das BTV wird nur bei zusammenpassender Videodatenbank und Steuerungsprogramm abgespielt. Ansonsten läuft ein Notprogramm ab, beispielsweise wird der Programmträger einfach von vorne bis hinten abgespielt, ist das hintere Ende erreicht, beginnt es wieder von vorne.
Zur Kopplung des Steuergeräts mit dem Abspielgerät wird vorzugsweise die Schnittstelle RS232 genutzt. Dies schließt nicht aus, daß auch andere heute oder in Zukunft verfügbare Schnittstellen verwendet werden. Abspielgerät und Empfänger des Telekommunikationsdienstes sind Standardgeräte des Marktes, können ggf. um hier benötigte Funktionen erweitert sein.
Das Steuergerät kann einen eigenen Speicher besitzen, um das empfangene Steuerungsprogramm zu speichern. Es kann das empfangene Steuerungsprogramm so modifizieren, daß es den Möglichkeiten des Abspielgeräts angepaßt ist. Es ist zudem in der Lage, ein empfangenes Steuerprogramm nicht unmittelbar nach Empfang, sondern erst zu einem im Steuerprogramm mitgegebenen Zeitpunkt zu aktivieren.

## Patentansprüche

1. Vorrichtung, bestehend aus Empfänger eines Telekommunikationsdienstes zum Empfang einer digitalen Nachricht (dem Steuerungsprogramm), einem Steuergerät und einem Abspielgerät mit Videodatenbank, die miteinander verbunden sind und dadurch in der Lage sind, durch Anwendung des Steuerungsprogramms auf die Videodatenbank ein audiovisuelles Programm (Geschäftsfernsehen) abzuspielen, wobei das Abspielgerät eine Videodatenbank auf mindestens einem Speichermedium enthält, die aus einzeln indizierten audiovisuellen Programmabschnitten variabler Länge besteht, auf die das Abspielgerät wahlfrei direkt zum Abspielen zugreifen kann, und das Abspielgerät über eine elektrische Schnittstelle ein Steuerungsprogramm mit dem Steuergerät austauscht, das aufdie Videodatenbank bezogen ist und die Reihenfolge und Bilddarstellung der Programmabschnitte aus der Videodatenbank enthält, die als BTV abgespielt werden sollen, und das Steuergerät das Steuerungsprogramm über eine digitale Schnittstelle vom Empfänger des Telekommunikationsdienstes übernimmt, entsprechend den Eigenschaften des Abspielgeräts bearbeitet und dem Abspielgerät über eine elektrische Schnittstelle übergibt, und der Empfänger eines Telekommunikationsdienstes ein Steuerungsprogramm empfängt, das die Reihenfolge und Bilddarstellung der Programmabschnitte aus der Videodatenbank enthält, die als Programm abgespielt werden sollen, und an das Steuergerät übergibt, und ein Telekommunikationsdienst verwendet wird, der in der Lage ist, digitale Informationen von einem Sender zu einem Empfänger (Punkt zu Punkt) oder von einem Sender zu mehreren wählbaren Emfängern (Multipoint) zu übertragen.

2. Vorrichtung, gemäß Patentanspruch 1, dadurch gekennzeichnet, daß als Speichermedium für die Videodatenbank eine Video-CD oder CDi verwendet wird.

3. Vorrichtung, gemäß Patentanspruch 1, dadurch gekennzeichnet, daß als Speichermedium für die Videodatenbank eine Digital Versatile Disc (DVD) verwendet wird.

4. Vorrichtung, gemäß Patentanspruch 1, dadurch gekennzeichnet, daß das Steuerungsprogramm sich auf einen bestimmten Typ oder Typfamilie des Abspielgerätes bezieht.

5. Vorrichtung, gemäß Patentanspruch 1, dadurch gekennzeichnet, daß das Steuerungsprogramm unabhängig ist vom Typ oder der Typfamilie des Abspielgerätes und die Umsetzung auf das für das eingesetzte Abspielgeräte spezifische Steuerungsprogramm im Steuergerät erfolgt.

6. Vorrichtung, gemäß Patentanspruch 1, dadurch gekennzeichnet, daß das Steuerungsprogramm Informationen über Bildlage (Bild in Bild, auch rekursiv) oder Überblendung enthält.

7. Vorrichtung, gemäß Patentanspruch 1, dadurch gekennzeichnet, daß das Steuerungsprogramm Information über Fließtext oder Zeichenfolgen, die in das Bild eingeblendet werden sollen, enthält.

8. Vorrichtung, gemäß Patentanspruch 1, dadurch gekennzeichnet, daß das Steuerungsprogramm Informationen über den Zeitpunkt (sofort, nach Ende des laufenden Programms, frühestens ab Datum, genau ab Datum) enthält, zu oder ab dem das Steuerungsprogramm eingesetzt werden soll.

9. Vorrichtung, gemäß Patentanspruch 1, dadurch gekennzeichnet, daß das Steuerungsprogramm die Bezeichnung der Videodatenbank enthält, auf die sich das Steuerungsprogramm bezieht.

10. Vorrichtung, gemäß Patentanspruch 1, dadurch gekennzeichnet, daß das Steuerungsprogramm Angaben über ein in der Videodatenbank abgelegtes Steuerungsprogramm enthält, das als Steuerungsprogramm eingesetzt werden soll.

11. Vorrichtung, gemäß Patentanspruch 8, dadurch gekennzeichnet, daß das Steuergerät das Steuerungsprogramm speichert und zu dem im Steuerungsprogramm enthaltenen Zeitpunkt an das Abspielgerät übergibt.

12. Vorrichtung, gemäß Patentanspruch 10, dadurch gekennzeichnet, daß das Steuergerät vom Abspielgerät Statusinformationen über Schnittstelle übernimmt und dazu benutzt, um die Übergabe des gespeicherten Steuerungsprogramms mit dem momentanen Programmablauf zu synchronisieren.

13. Vorrichtung, gemäß Patentanspruch 1, dadurch gekennzeichnet, daß als Schnittstelle zwischen Steuergerät und Abspielgerät eine externe Programmierschnittstelle des Abspielgeräts verwendet wird.

14. Vorrichtung, gemäß Patentanspruch 1, dadurch gekennzeichnet, daß als Schnittstelle zum Steuergerät eine zusätzliche Schnittstelle im Abspielgeräts bereitgestellt wird.

15. Vorrichtung, gemäß Patentanspruch 1, dadurch gekennzeichnet, daß als Telekommunikationsdienst das Telefon im ISDN-Netz verwendet wird.

16. Vorrichtung, gemäß Patentanspruch 1, dadurch gekennzeichnet, daß als Telekommunikationsdienst ein Funkrufdienst (Pager)(TelMi, Scall, Skyper, Quix, Cityruf oder ähnlich) verwendet wird.

17. Verfahren zum Betrieb eines Geschäftsfernsehens mit mindestens einem Empfänger eines Telekommunikationsdienstes zum Empfangen einer digitalen Nachricht, einem Steuergerät und einem Abspielgerät mit Videodatenbank, die miteinander verbunden sind und dadurch in der Lage sind, durch Anwendung des Steuerungsprogrammes auf die Videodatenbank ein audiovisuelles Datenprogramm (Geschäftsfernsehen) abzuspielen, wobei ein Speichermedium für die Videodatenbank vorgesehen ist, das mehrere, einzeln indizierte audiovisuelle Programmabschnitte variabler Längen speichert, auf die ein Abspielgerät wahlfrei direkt zum Abpielen zugreifen kann und das im vorab an die Empfänger versandt wird,
das Abspielgerät über eine elektrische Schnittstelle ein Steuerungsprogramm erhält, das über den Telekommunikationsdienst und den Empfänger einem Steuergerät zugeleitet wird, das das in der Videodatenbank befindliche Speichermedium steuert, insbesondere Reihenfolge und Bilddarstellung der Programmabschnitte aus der Videodatenbank festlegt.
